# DEMANDE DE BREVET EUROPEEN

(11) **EP 3 284 330 A1**
(43) Date de publication de la demande: **21.02.2018**
(21) Numéro de dépôt: 17186682.5
(22) Date de dépôt: 17.08.2017
(51) Int. Cl.: A01B 73/04, A01D 78/10

(54) **MACHINE AGRICOLE COMPORTANT UN DISPOSITIF D'ASSISTANCE AU REPLIAGE**

(30) Priorité: 19.08.2016 FR 1657831
(71) Demandeur: Kuhn S.A., 67700 Saverne (FR)
(72) Inventeur: ANTONI, Pascal, 57850 SCHAEFERHOF (FR); LESIEUR, Ludovic, 57370 BOURSCHEID (FR); SEEMANN, Michel, 57370 METTING (FR)
(74) Mandataire: Esch, Esther Evelyne

(57) **Abrégé**

L'invention concerne une machine agricole qui présente deux sections (11, 12) articulées l'une par rapport à l'autre, au moins un trou oblong (17) étant ménagé dans l'une des deux sections, la machine comportant un dispositif de liaison (13) présentant un actionneur (15) configurer pour faire pivoter une section par rapport à l'autre, et un limiteur de course (18), l'actionneur portant une tige de pivot mobile (21), d'axe longitudinal transversal au trou oblong, la tige de pivot mobile étant arrangée pour coulisser dans la longueur du trou oblong, le limiteur de course admet un état bloquant dans lequel il obstrue le trou oblong, limitant ainsi le coulissement de la tige de pivot dans le trou oblong, le limiteur de course pouvant atteindre l'état bloquant depuis un état libre dans lequel il est monté mobile en rotation par rapport au trou oblong.

## Description

La présente invention se rapporte au domaine technique général du machinisme agricole et entre autres aux machines comportant un châssis repliable ayant une section centrale et au moins une section latérale de chaque côté de la section centrale. Dans un cas particulier, la machine agricole est une barre de semis. Il peut encore s'agir d'une machine de travail du sol telle qu'un cultivateur ou une herse, d'une machine de traitement des fourrages telle qu'un girofaneur, ou plus généralement d'une machine agricole à châssis repliable nécessitant un suivi de terrain par les sections latérales.

Dans un type de machines comportant une première section sur laquelle est montée une deuxième section repliable via une articulation, un vérin est monté en une extrémité sur la première section et porte à l'extrémité de sa tige rétractable une tige de pivot transversale. Cette tige de pivot est montée coulissante dans un trou oblong ménagé sur la deuxième section. Au repliage de la deuxième section, lorsque le trou oblong se retrouve à 90 degrés de l'axe de la tige mobile et que le centre de gravité de la section repliable a franchi le plan vertical passant par l'articulation, la section repliable redescend par gravité vers la première section. La tige de pivot coulisse alors dans le trou oblong et s'éloigne de l'extrémité du trou oblong. En conséquence, la section repliable n'adopte pas la position souhaitée pour le transport. En outre, lors du dépliage de la machine, lorsque le centre de gravité de la deuxième section franchit le plan vertical passant par l'articulation entre les sections, la deuxième section redescend par gravité. Si la tige de pivot ne se trouve pas à l'extrémité prévue du trou oblong, la deuxième section chutera jusqu'à ce que la tige de pivot vienne en butée et que le vérin puisse retenir la section. Cette chute risque d'occasionner des dégâts dans le vérin, le circuit hydraulique, voire sur le châssis si le vérin cède sous le poids de la deuxième section.

Par ailleurs, selon le poids, la physionomie et le nombre des outils, la position du centre de gravité des sections repliables diffère. A chaque poids et configuration d'outils correspond un centre de gravité différent et une inclinaison optimale du trou oblong (par exemple par rapport à l'horizontale). Aussi, l'inclinaison du trou oblong est un compromis difficile pour assurer un basculement de la section repliable convenable pour toutes les configurations d'outils prévues.

L'invention a pour objectif de limiter le coulissement de la tige de pivot portée par l'actionneur dans le trou oblong dans une position où la tige d'actionneur est à 90 degrés par une structure polyvalente, simple à mettre en oeuvre, facile à assembler et économique. Il est souhaitable par ailleurs que les sections latérales puissent assurer un suivi de terrain lorsqu'elles sont en position de travail.

L'invention porte ainsi sur une machine agricole à deux sections articulées l'une par rapport à l'autre, au moins un trou oblong étant ménagé dans l'une des deux sections, la machine comportant un dispositif de liaison présentant un actionneur configuré pour faire pivoter une section par rapport à l'autre, et un limiteur de course, l'actionneur portant une tige de pivot mobile, d'axe longitudinal transversal au trou oblong, la tige de pivot mobile étant arrangée pour coulisser dans la longueur du trou oblong. L'invention est remarquable en ce que le limiteur de course admet un état bloquant dans lequel il obstrue le trou oblong, limitant ainsi le coulissement de la tige de pivot dans le trou oblong, le limiteur de course pouvant atteindre l'état bloquant depuis un état libre dans lequel il est monté mobile en rotation par rapport au trou oblong.

La machine agricole présente ainsi un dispositif de limitation de course de la tige de pivot dans le trou oblong de structure économique à mettre en oeuvre et simple dans son fonctionnement, ne nécessitant pas d'intervention manuelle de l'opérateur.

En outre, la présence du limiteur permet d'uniformiser la conception des machines puisqu'en l'absence de remontée de la tige de pivot dans le trou oblong, il n'y a plus besoin de concevoir de machines différentes pour différentes configurations d'outils. Aussi, le limiteur peut être mis en oeuvre sur une gamme importante d'inclinaisons de trous oblongs. Le limiteur sert donc d'organe de sécurité et est universel en ce sens qu'il peut être mis en oeuvre sur différents types de machines agricoles ayant une section repliable par rapport à une autre.

Avantageusement, à l'état libre, le limiteur de course peut être mobile en rotation sous l'effet de son propre poids au cours de la rotation de l'une des deux sections par rapport à l'autre section.

Cette caractéristique permet de lier le mouvement du limiteur de course à la rotation de la section en rotation. Il ne nécessite pas la présence de ressort pour se mettre en place. Le limiteur de course est ainsi particulièrement simple et économique de conception et d'utilisation.

De préférence, le sens de rotation du limiteur de course est inverse au sens de rotation de la section portant le trou oblong.

Cette caractéristique permet une mise en place automatique progressive et sans à-coup du limiteur de course, à l'inverse d'un limiteur adoptant le même sens de rotation que la section repliée et qui basculerait d'un coup au passage du plan vertical par son centre de gravité.

Avantageusement, l'état bloquant est atteint au cours du repliage d'une des deux sections par rapport à l'autre au moyen de l'actionneur, et avant qu'une tige rétractable de l'actionneur ne se retrouve à 90 degrés d'un axe longitudinal A1 du trou oblong.

Avantageusement, le limiteur de course présente un bec, un col et un rebord, le col étant un renfoncement ménagé entre le bec et le rebord.

Cette structure présentant un renfoncement permet d'envelopper la tige de pivot en extrémité de trou oblong au repliage ou lors de sursauts au travail de la machine. Ainsi, le limiteur de course est empêché de se désengager au cours d'une utilisation courante.

Dans un mode de réalisation particulièrement avantageux, le limiteur de course est défini par des longueurs D1 à D4 par rapport un axe de pivot autour duquel le limiteur est monté pivotant, D1 étant la distance entre l'axe de pivot et le point du bec le plus éloigné de l'axe de pivot, D2 étant la distance entre l'axe de pivot et le point du col le plus proche de l'axe de pivot, D3 étant la distance entre l'axe de pivot et le point du rebord le plus éloigné de l'axe de pivot, D4 étant la distance maximale entre l'axe de pivot et le point le plus proche de la tige de pivot lorsque celle-ci est en position extrême, en butée contre une surface d'extrémité du trou oblong opposée à l'axe de pivot, D3 étant supérieure à D4, elle-même supérieure à D1, elle-même supérieure ou égale à D2.

Ces distances permettent d'assurer la mise en place correcte du limiteur de course dans une position bloquante pour la tige de pivot : déplacement relatif de la tige de pivot jusqu'au col où elle est enveloppée, mise en butée du rebord contre la tige de pivot et maintien de la tige de pivot dans le col au cours du travail de la machine.

Avantageusement, le limiteur de course admet un état bloqué dans lequel le limiteur est immobilisé par un bloqueur dans la position atteinte à l'état bloquant dans laquelle il obstrue le trou oblong et limite le coulissement de la tige de pivot dans le trou oblong.

Cette structure permet un contrôle de la hauteur et/ou de la profondeur de travail en empêchant un repliage intempestif des sections.

Avantageusement à l'état bloqué, le limiteur de course peut être également vecteur de poussée de l'une des sections sur l'autre des sections via l'actionneur, c'est-à-dire avoir un rôle d'organe intermédiaire et de transfert de poussée.

Ceci permet d'améliorer encore le contrôle de la hauteur et/ou de la profondeur de travail.

Avantageusement, à l'état bloqué, le bloqueur de course présente :
- une ouverture ménagée dans le limiteur de course en regard du trou oblong ;
- un élément de fixation supplémentaire logé dans l'ouverture et dans la section sur laquelle le trou oblong est ménagé, par exemple une tige, elle-même fixée par une goupille.

Dans un mode de réalisation particulier, une première section est une section centrale de la machine, tandis que la deuxième section est une section latérale repliable au-dessus de la première section.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 est une vue en élévation d'une jonction entre deux sections d'un châssis repliable d'une machine agricole dans une position de travail ;
- la figure 2 est une vue en élévation des éléments de la figure 1 dans une position intermédiaire, au cours du repliage de l'une des sections depuis une position de travail vers une position de transport, ou au cours du dépliage depuis une position de transport ;
- la figure 3 est une vue en élévation des éléments de la figure 1 en position de transport ;
- la figure 4 est une vue en élévation d'une variante d'utilisation de la jonction dans la position de travail ; et,
- la figure 5 est une vue en détail d'une masse visible par exemple en figure 1.

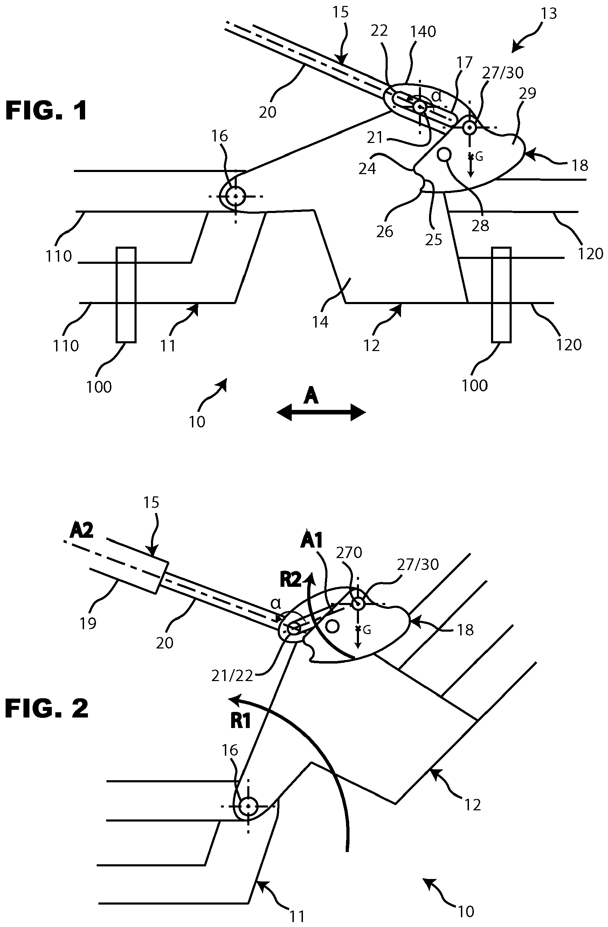

La figure 1 représente la jonction entre deux sections 11 et 12 du châssis repliable d'une machine agricole 10. Ici, les sections 11 et 12 sont généralement orientées latéralement selon une direction A transversale à une direction générale d'avance de la machine 10.

Dans l'exemple représenté aux figures 1 à 4, la machine 10 est une barre de semis, la section 11 est une section centrale du châssis et la section 12 une section latérale. La section 11 reste alors horizontale par rapport au sol et la section 12 est repliable à la verticale ou au-delà de la verticale par rapport à la section 11. Une jonction analogue non représentée est prévue par symétrie, de l'autre côté de la section centrale 11 avec une deuxième section latérale.

Les sections 11 et 12 comportent chacune une ou plusieurs poutres 110 ou 120. La disposition illustrée des poutres 110 et 120 n'est pas limitative, celles-ci pouvant être disposées à différentes hauteurs et/ou les unes derrière les autres selon une direction prévue d'avancement de la machine. Les poutres 110 ou 120 d'une même section 11 ou 12 peuvent porter des roues (non représentées ici) et un ou plusieurs outils 100 qui seront non limitativement des éléments semeurs, des rotors de fanage, des socs de cultivateurs ou des pointes de herses, des portions de rouleaux de compactage ou d'autres outils, éventuellement de plusieurs types en combinaison, selon le type de machine qui est alors un semoir, par exemple à disques ou à dents, un planteur, un girofaneur, un cultivateur, une herse ou tout autre machine agricole appropriée.

Les poutres 110 ou 120 d'une même section 11 ou 12 sont préférentiellement mais non limitativement fixées les unes aux autres, par exemple par soudage, brasage, assemblages de boulons, ou tout autre moyen ou méthode appropriés, seul(e) ou en combinaison.

Les sections 11 et 12 sont montées l'une sur l'autre au moyen d'une articulation 16. Plus précisément, dans l'exemple non limitatif représenté, la section 12 comporte une bride 14 reliée à la section 11 par l'articulation 16. La bride 14 est par exemple portée par une poutre inférieure 120.

La bride 14 fait en outre partie d'un dispositif de liaison 13 prévu pour le repliage des sections 11 et 12 l'une par rapport à l'autre. La bride 14 présente, ici dans sa partie supérieure, deux plaques d'extrémité 140 parallèles. Un trou oblong 17 est ménagé dans chaque plaque 140, les trous 17 étant de même orientation et préférentiellement de même longueur. Les trous oblongs 17 sont préférentiellement des trous simples, c'est-à-dire rectilignes, c'est-à-dire encore que les extrémités d'un même trou oblong 17 sont directement en regard l'une de l'autre (figure 1).

Le dispositif de liaison 13 comporte par ailleurs un actionneur 15 ainsi qu'au moins un limiteur de course 18, appelé masse en référence à l'exemple illustré et décrit.

L'actionneur 15 est ici un vérin hydraulique double effet. L'actionneur 15 comporte un corps 19 et une tige 20 coulissante et rétractable dans le corps 19. L'extrémité de l'actionneur 15 du côté du corps est montée mobile en rotation, par un pivot ou une rotule, sur un support solidaire de la section 11. L'extrémité de la tige 20 opposée au corps 19 présente une tige transversale 21 appelée tige de pivot mobile, ou plus simplement tige de pivot. La tige de pivot 21 s'étend ici transversalement à la tige coulissante 20, préférentiellement parallèlement à l'axe de l'articulation 16. Dans l'exemple représenté, la tige 20 s'étend dans le plan des figures tandis que la tige de pivot 21 est transversale au plan des figures.

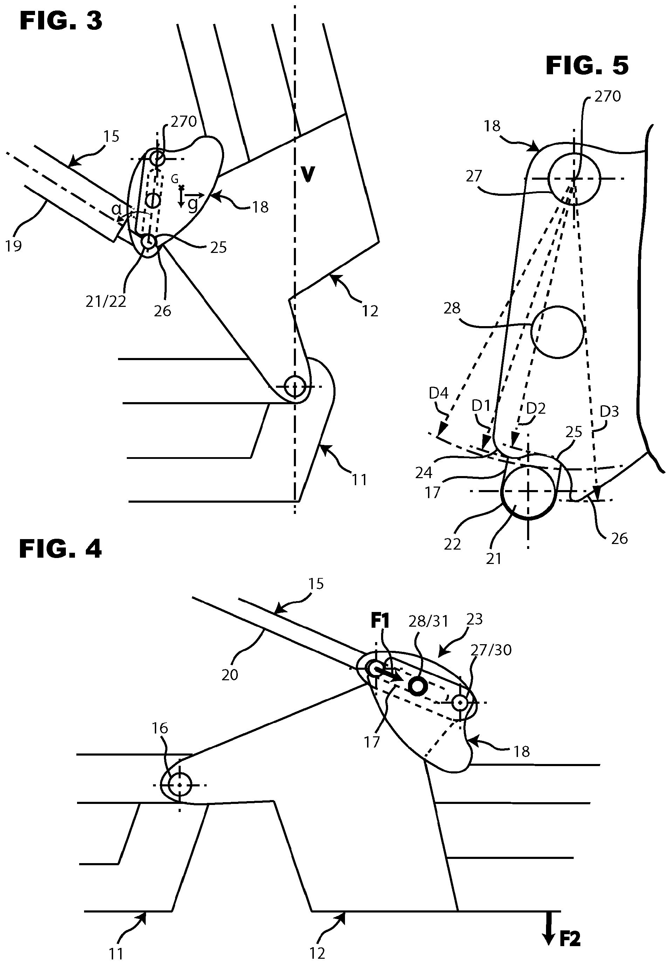

La tige de pivot 21 est montée coulissante dans la longueur des trous oblongs 17 de manière à permettre un déplacement relatif de la tige 20 par rapport à la bride 14. Au moins l'un des trous oblongs 17 présente une surface d'extrémité 22 formant butée pour la tige de pivot 21, la surface 22 étant disposée du côté de l'actionneur 15 dans la position de travail (telle que visible aux figures 1 et 4).

L'actionneur 15 sert à rabattre ou déployer la section repliable 12. Lors du fonctionnement de l'actionneur 15, la tige de pivot 21 coulisse dans les trous oblongs 17 jusqu'à venir en butée contre la surface 22. Un léger pivotement de la tige de pivot 21 est possible pendant le coulissement puisque l'actionneur 15 est monté en un point fixe en son extrémité opposée. Puis, à mesure que la section 12 est repliée autour de l'articulation 16, la tige 21 pivote dans les trous oblongs 17. La liaison entre la tige 21 et les trous oblongs 17 peut donc fonctionner comme un pivot et/ou comme une glissière. Des détails sur le fonctionnement de la machine 10 seront donnés plus loin dans le texte.

La masse 18 est ici une plaque, de préférence métallique, par exemple en acier ou dans un autre métal ou alliage. Dans l'exemple représenté, la masse 18 présente sur son contour un bec 24, un col 25 et un rebord 26 (voir en détail en figure 5). Le pourtour de la masse 18 suit ici un profil continu entre le bec 24, le col 25 et le rebord 26. Le bec 24 et le rebord 26 forment deux saillies sur ce profil tandis que le col 25 forme un renfoncement entre le bec 24 et le rebord 26. De préférence, mais non limitativement, le bec 24 et le col 25 comportent chacun une surface en portion de cylindre de révolution, respectivement convexe et concave. Le col 25 peut alors être en correspondance de forme avec la tige de pivot 21. La zone de contact est alors surfacique plutôt que linéaire, ce qui maximise la longévité des pièces et le maintien de la tige de pivot 21 dans le col 25. Alternativement, le col 25 peut avoir un profil distinct, par exemple carré, rectangle ou autre.

Une ouverture 27 est par ailleurs ménagée dans la masse 18. L'ouverture 27 se trouve par exemple à l'opposé du bec 24 suivant une direction longitudinale de la pièce. L'ouverture 27 est ici une ouverture traversante, à section circulaire.

La masse 18 est ici montée pivotante à la plaque 14 par l'intermédiaire d'une tige 30. La tige 30 est logée dans l'ouverture 27. En outre, la tige 30 peut être logée dans une douille fixée dans au moins un trou oblong 17, ou encore logée dans un orifice ménagé directement dans au moins une plaque 140. La tige 30 et l'ouverture 27 s'étendent selon un axe 270 (figures 2 et 5). L'axe 270 forme axe de pivot et la masse 18 peut tourner autour de l'axe 270 lors des opérations de repliage et de dépliage de la section 12.

La masse 18 présente encore une protubérance 29 formant contrepoids. La protubérance 29 est dimensionnée et localisée en fonction de la masse que l'on souhaite donner à la masse 18 et de la position souhaitée pour le centre de gravité G de 18. Lorsque la masse 18 pivote autour de l'axe 270, le centre de gravité reste au droit de l'axe 270 (figures 1 et 2), jusqu'à ce que le bec 26 vienne buter contre la tige de pivot 21. La masse 18 admet donc un état libre dans lequel elle peut pivoter, avant de venir en butée contre la tige 21, et un état bloquant dans lequel elle est en butée contre la tige de pivot 21 et pour lequel plus de détails seront donnés plus loin. La transition entre l'état libre et l'état bloquant se fait donc par la rotation de la masse 18 et par la venue en contact de celle-ci contre la tige de pivot 21.

La figure 5 illustre un détail agrandi de la masse 18. La figure 5 montre aussi la tige de pivot 21 en sa position extrême, contre la surface 22.

Différentes distances notables D1, D2, D3 et D4 aident à dimensionner la masse 18 et plus généralement le dispositif 13. Ces distances D1 à D4 sont définies par rapport à l'axe 270 autour duquel la masse 18 pivote.

Une première longueur D1 est la distance entre l'axe 270 et le point du bec 24 le plus éloigné de l'axe 270. La longueur D2 est la distance entre l'axe 270 et le point du col 25 le plus proche de l'axe 270. La longueur D3 est la distance entre l'axe 270 et le point du rebord 26 le plus éloigné de l'axe 270. Enfin, la longueur D4 est la distance maximale entre l'axe 270 et le point le plus proche de la tige de pivot 21 lorsque celle-ci est en position extrême, en butée contre la surface 22.

La longueur D1 est inférieure à la longueur D4 de manière à ce que le bec 24 puisse franchir la tige 21 lors d'une rotation de la masse 18.

La longueur D3 est supérieure à la longueur D4 de sorte que le rebord 26 ne puisse pas franchir la tige 21, même lorsque la tige 21 est en butée contre la surface 22. De préférence, la différence entre D3 et D4 est supérieure à un tiers du rayon de la tige 21. De préférence encore, cette différence est supérieure au rayon de la tige 21.

La longueur D2 est inférieure à la longueur D1 de sorte que la tige 21 puisse se loger aisément et/ou être maintenue dans le col 25 lorsque la tige coulisse dans les trous oblongs 17. De préférence, la différence entre D2 et D1 est inférieure au rayon de la tige 21. De préférence encore, cette différence est inférieure à la moitié du rayon de la tige 21. Une différence importante entre D1 et D2 permet de garantir le maintien de la tige 21 dans le col 25.

D'une manière générale, il est souhaitable que les dimensions D3, D4, D1 et D2 soient décroissantes dans cet ordre, c'est-à-dire que D3 > D4 > D1 > D2.

Un angle α est défini entre l'axe longitudinal A1 d'un trou oblong 17 et l'axe longitudinal A2 de l'actionneur 15. Les axes A1 et A2 sont considérés dans le plan des figures qui est perpendiculaire à la direction d'avance de la machine 10. L'angle α est situé du côté de l'actionneur 15 opposé à la section à laquelle il est monté en rotation, ici du côté supérieur (voir figures 1 à 3). L'orientation de l'axe longitudinal A1 du trou oblong 17 est telle que celui-ci n'est pas sécant avec l'axe de l'articulation 16. Ainsi, le vérin 15 dispose d'un bras de levier suffisant pour le repliage de la section 12.

Dans la position de travail illustrée en figure 1, l'angle α est un angle plat (non limitativement). L'angle α peut plus généralement être un angle obtus, par exemple supérieur à 120 degrés, voire être un angle supérieur à 180 degrés. Un angle α sensiblement plat, par exemple entre 160 et 200 degrés, préférentiellement 170 à 190 degrés, est à privilégier pour limiter les frictions entre la tige 21 et les rebords des trous oblongs 17 d'une part lors du suivi de terrain et d'autre part lorsque l'actionneur 15 est en cours de rétractation, avant que la tige 21 ne vienne en butée contre la surface 22. Dans cette position, la masse 18 est mobile en rotation autour de la tige 30, et la section 12 est flottante. La section 12 peut assurer un suivi de terrain, c'est-à-dire suivre l'évolution du profil du sol par rotation dans un sens ou dans l'autre autour de l'articulation 16 à mesure que la machine avance.

Dans la position de transport illustrée en figure 3, l'angle α est de préférence un angle aigu, de préférence inférieur à 80 degrés, dans la mesure où la section 12 est rabattue au-delà de la verticale et/ou la tige de pivot mobile 21 est retenue en une extrémité du trou oblong 17 par le limiteur de course 18, comme il est illustré en figure 3. Plus précisément, la section 12 est repliée au-delà du plan vertical V au-dessus de la section centrale 11.Autrement dit, la section 12 a été repliée de plus de 90 degrés depuis la position de travail illustrée en figure 1, qui est horizontale dans l'exemple représenté. Le rebord 26 est alors en butée contre la tige de pivot 21 de l'extrémité de l'actionneur 15, et le centre de gravité G de la masse ne se trouve plus au droit de l'axe 270 puisque le contact contre la tige 21 s'oppose à ce que la masse 18 ne tourne plus loin.

Pour replier la section 12 au-dessus de la section 11 depuis la position de travail (figure 1) vers la position de transport (figure 3) via la position intermédiaire illustrée en figure 2, l'actionneur 15 est rétracté. La tige de pivot 21 coulisse dans les trous oblongs 17 jusqu'à venir en butée contre la surface 22. Sous l'effet de la rétractation de l'actionneur 15, la section 12 se soulève alors du sol et pivote autour de l'articulation 16. Dès le soulèvement de la section 12, la masse 18 pivote autour de la tige 30 sous l'effet de son propre poids jusqu'à ce que le bec 24 franchisse la tige de pivot 21 et que la tige 21 se retrouve en regard du col 25. Le rebord 26 vient alors en butée contre la tige de pivot 21 et la masse 18 se retrouve maintenue contre la tige de pivot 21 sous l'effet de son propre poids. L'actionneur 15 poursuit son effort de rétractation et la section 12 continue de pivoter autour de l'articulation 16 jusqu'à la position de transport de la machine 10. Dans l'exemple illustré, non limitativement, la tige 20 de l'actionneur 15 est rétractée entièrement. Alternativement, elle peut n'être rétractée que partiellement.

Pendant tout le repliage, la tige de pivot 21 reste à proximité immédiate d'une même extrémité et/ou est maintenue grâce à la masse 18 contre une même surface d'extrémité, la surface 22. La tige de pivot 21 est également empêchée par la masse 18 de revenir vers l'autre extrémité du trou oblong 17 jusqu'à la venue en butée de la section repliable 12.

De manière notable, en l'absence du limiteur 18, lorsque l'angle α atteint 90 degrés, la tige de pivot 21 tendrait à suivre le rebord des trous oblongs 17 du côté de l'actionneur 15, c'est-à-dire tendrait à remonter dans les trous oblongs 17 pour suivre le chemin de moindre résistance alors que la tige rétractable 20 tendrait à se maintenir à 90 degrés de l'axe longitudinal des trous oblongs 17, ou en d'autres termes encore, l'effort subi par la tige de pivot 21 tend à rester normal au rebord des trous oblongs 17. En outre, le poids de la section 12 tend à faire chuter celle-ci vers la section centrale 11, ce qui favoriserait la remontée de la tige de pivot 21 dans les trous oblongs 17.

Toutefois, en présence de la masse 18, la tige 21 prend appui dans le col 25 qui l'empêche de chasser dans les trous oblongs 17. La masse 18 se trouve donc à l'état bloquant dans lequel elle limite, et préférentiellement bloque (c'est-à-dire limite en totalité), la course de la tige de pivot 21 dans les trous oblongs 17 lorsque l'angle α franchit le seuil de 90 degrés pendant le repliage. Dans le mode de réalisation illustré, la masse 18 enveloppe la tige de pivot 21 à l'état bloquant. La masse 18 est maintenue dans cet état bloquant sous l'effet de son propre poids. On note que la masse 18 vient en contact avec la tige de pivot 21 avant que l'angle α n'atteigne ou ne franchisse 90 degrés. La limitation de course de la tige de pivot 21 dans les trous oblongs 17 peut être partielle si un débattement entre le limiteur 18 et la tige 21 est jugé utile.

Par ailleurs, la masse 18 permet à la tige de pivot 21 de se trouver directement contre la surface d'extrémité 22 en début de dépliage, ce qui limite toute latence au début de cette étape, l'actionneur 15 étant directement en mesure de repousser la section 12.

Pour déplier la machine 10, l'actionneur 15 est déployé. Comme au repliage, la tige de pivot 21 est retenue par la masse 18 ce qui l'empêche de remonter dans les trous oblongs 17. Lorsque le centre de gravité de la section 12 franchit le plan V, le poids de la section 12 tend à la faire redescendre vers le sol. La tige de pivot 21 se retrouve contre la surface 22 et retient la section 12 dans sa descente. L'angle α augmente au-delà de 90 degrés puis seulement la masse 18 s'éloigne de la tige de pivot 21.

Dans l'exemple représenté, le sens de la rotation R2 de la masse 18 (autour de la tige 30) est inverse au sens de la rotation R1 de la section 12 correspondante (autour de l'articulation 16). A l'exemple de la figure 2, lors du repliage de la section 12, la section 12 tourne dans le sens antihoraire alors que la masse 18 tourne dans le sens horaire. De même, lors du dépliage de la section 12, la section 12 tourne dans le sens horaire tandis que la masse 18 tourne dans le sens antihoraire. En dehors de l'état de contact du rebord 26 avec la tige de pivot 21, la rotation R2 de la masse 18 est d'angle égal en valeur absolue à l'angle de la rotation R1 de la section 12. Les flèches R1 et R2 sont uniquement représentées en référence au repliage pour une question de lisibilité.

La masse 18 peut être pourvue optionnellement d'un bloqueur en position 23. Dans le mode de réalisation représenté, ce bloqueur en position présente une deuxième ouverture 28 et une tige 31. Cette ouverture 28 est ici traversante. L'ouverture 28 est ménagée entre le col 25 et l'ouverture 27. En figure 4, la tige 31 est fichée dans l'ouverture 28 et dans les trous oblongs 17 voisins. La tige 31 est retenue en position au moyen de goupilles ou de tout autre élément de fixation approprié (boulon, rivet, etc.).

Le bloqueur 23 empêche la masse 18 de tourner par rapport à la tige 27 et donc à la section 12 sur laquelle elle est montée. Le bloqueur 23 maintient donc la masse 18 en position de blocage de la tige de pivot 21 et la masse 18 obstrue les trous oblongs 17. La masse est alors dans un état bloqué dans lequel un élément de fixation supplémentaire 31, distinct de la tige 27 et de la tige 21, est mis en place sur la masse 18 pour l'immobiliser en rotation par rapport à la section sur laquelle le trou oblong est ménagé. Ici, l'élément de fixation supplémentaire est la tige 31, éventuellement complétée d'une goupille automatique.

Le passage de la masse 18 à l'état bloqué peut se faire depuis un état libre, par exemple lorsque la section 12 est en position de travail permettant le suivi de terrain, telle qu'à l'horizontale. Une manipulation manuelle de la masse 18 est alors nécessaire pour aligner l'élément de fixation supplémentaire 31 avec au moins un des trous oblongs 17. La mise à l'état bloqué peut également se faire depuis l'état bloquant, auquel cas, le rebord 26 est déjà en butée contre la tige de pivot 21. Dans tous les cas, il convient que l'actionneur 15 soit suffisamment rétracté pour que le bec 24 franchisse la tige de pivot 21 avant la mise en place de l'élément de fixation 31. L'état bloquant et l'état bloqué correspondent à deux états distingués par la relation de la masse 18 aux pièces voisines : l'un dans lequel la masse 18 limite le coulissement de la tige de pivot 21, l'autre dans lequel la masse 18 est immobilisée par un organe tiers contre la section 12.

Ainsi, en position de travail, il est possible d'appliquer une force F1 d'appui sur la masse 18 qui résulte en l'application d'une force F2 d'appui vers le bas (figure 4). Les forces F1 et F2 sont représentées sans respecter d'échelle particulière, ni de proportion de l'une par rapport à l'autre. L'application de la force F2 est particulièrement avantageuse dans certaines circonstances de travail pour assurer un travail uniforme et de qualité constante. D'une manière générale, l'application de la force F2 permet d'éviter un soulèvement intempestif de la section repliable. Dans le cas d'une barre de semis ou de travail du sol, cela permettra par exemple de travailler à une profondeur importante et/ou constante selon le type de sol. Ceci permet d'assurer une germination homogène. Dans le cas d'une barre de coupe ou d'un broyeur d'accotement, cela permettra d'appliquer une force supérieure à la gravité à la force vers le haut qu'opposent les végétaux traités. Ceci permet de maximiser le rendement et/ou d'harmoniser la hauteur de coupe ou de broyage.

Préférentiellement, au moins une deuxième masse similaire ou identique à la masse 18 décrite ci-dessus est prévue à l'arrière de la bride 14. De préférence encore, la deuxième masse est montée sur la même tige 30 que la première masse 18.

En variante, les sections 11 et 12 sont reliées par au moins une autre articulation. L'axe de cette autre articulation est alors aligné avec l'axe de l'articulation 16. Cette autre articulation peut être elle-même secondée d'un dispositif de liaison 13 du type décrit ci-dessus, pourvu d'une ou de plusieurs masses 18.

En variante, la bride 14 ne comporte qu'une plaque 140 pourvue d'un trou oblong 17. La tige 20 de l'actionneur est alors fourchue en son extrémité de manière à offrir une bonne stabilité de la tige de pivot 21 par rapport à la bride 14, et donc des sections 11 ou 12 du châssis entre elles. Des renforts ou surépaisseurs peuvent être prévus sur la plaque 140 pour en garantir la résistance.

Le dispositif de liaison 13 a été décrit en référence au repliage d'une section latérale 12 sur une section centrale 11. Il convient de noter que l'invention couvre également la mise en oeuvre du dispositif de liaison 13 plus généralement sur toute section repliable sur ou par rapport à une autre section, qui peut être fixe ou elle-même repliable.

L'articulation 16 décrite ci-dessus est d'axe parallèle à la direction d'avance de la machine 10. En variante non illustrée, l'axe de l'articulation entre les sections voisines reliées par le dispositif de liaison est transversal à la direction d'avance, par exemple perpendiculaire ou orienté de 0 à 45 degrés par rapport à la direction d'avance.

## Revendications

1. Machine agricole qui présente deux sections (11, 12) articulées l'une par rapport à l'autre, au moins un trou oblong (17) étant ménagé dans l'une des deux sections,
la machine comportant un dispositif de liaison (13) présentant un actionneur (15) configuré pour faire pivoter une section par rapport à l'autre, et un limiteur de course (18),
l'actionneur portant une tige de pivot mobile (21), d'axe longitudinal transversal au trou oblong, la tige de pivot mobile étant arrangée pour coulisser dans la longueur du trou oblong,
***caractérisé en ce que*** le limiteur de course admet un état bloquant dans lequel il obstrue le trou oblong, limitant ainsi le coulissement de la tige de pivot dans le trou oblong, le limiteur de course pouvant atteindre l'état bloquant depuis un état libre dans lequel il est monté mobile en rotation par rapport au trou oblong.

2. Machine agricole selon la revendication précédente, dans laquelle à l'état libre, le limiteur de course (18) est mobile en rotation sous l'effet de son propre poids au cours de la rotation de l'une des deux sections par rapport à l'autre section.

3. Machine agricole selon la revendication précédente, dans laquelle le sens de rotation (R2) du limiteur de course (18) est inverse au sens de rotation (R1) de la section portant le trou oblong (17).

4. Machine agricole selon l'une des revendications précédentes, dans laquelle l'état bloquant est atteint au cours du repliage d'une des deux sections par rapport à l'autre au moyen de l'actionneur, et avant qu'une tige rétractable (20) de l'actionneur ne se retrouve à 90 degrés d'un axe longitudinal A1 du trou oblong (17).

5. Machine agricole selon l'une des revendications précédentes, dans laquelle le limiteur de course présente un bec (24), un col (25) et un rebord (26), le col étant un renfoncement ménagé entre le bec et le rebord.

6. Machine agricole selon la revendication précédente, dans laquelle le limiteur de course est défini par des longueurs D1 à D4 par rapport un axe de pivot (270) autour duquel le limiteur (18) est monté pivotant, D1 étant la distance entre l'axe de pivot et le point du bec (24) le plus éloigné de l'axe de pivot, D2 étant la distance entre l'axe de pivot et le point du col (25) le plus proche de l'axe de pivot, D3 étant la distance entre l'axe de pivot et le point du rebord (26) le plus éloigné de l'axe de pivot, D4 étant la distance maximale entre l'axe de pivot et le point le plus proche de la tige de pivot (21) lorsque celle-ci est en position extrême, en butée contre une surface d'extrémité (22) du trou oblong (17) opposée à l'axe de pivot (270), D3 étant supérieure à D4, elle-même supérieure à D1, elle-même supérieure ou égale à D2.

7. Machine agricole selon l'une des revendications précédentes, dans laquelle le limiteur de course admet un état bloqué dans lequel le limiteur est immobilisé par un bloqueur dans la position atteinte à l'état bloquant dans laquelle il obstrue le trou oblong et limite le coulissement de la tige de pivot dans le trou oblong.

8. Machine agricole selon la revendication précédente, dans laquelle, à l'état bloqué, le limiteur de course est également vecteur de poussée de l'une des sections sur l'autre des sections via l'actionneur.

9. Machine agricole selon l'une des revendications 7 ou 8, dans laquelle, à l'état bloqué, le bloqueur de course présente :
- une ouverture ménagée dans le limiteur de course en regard du trou oblong ;
- un élément de fixation supplémentaire logé dans l'ouverture et dans le trou oblong.

10. Machine agricole selon l'une des revendications précédentes, une première section étant une section centrale de la machine, la deuxième section étant une section latérale repliable au-dessus de la première section.
